(19)

Europäisches
Patentamt
European
Patent Office
Office européen
des brevets

(11)     **EP 4 273 768 A1**

(12)     **EUROPEAN PATENT APPLICATION**
published in accordance with Art. 153(4) EPC

(43) Date of publication:
**08.11.2023  Bulletin 2023/45**

(21) Application number: **21914611.5**

(22) Date of filing: **30.12.2021**

(51) International Patent Classification (IPC):
**G06Q 10/04** (2023.01)      **G06Q 10/06** (2023.01)

(52) Cooperative Patent Classification (CPC):
**G06Q 10/04; G06Q 10/06**

(86) International application number:
**PCT/CN2021/142992**

(87) International publication number:
**WO 2022/143880 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2020  CN 202011623609
31.12.2020  CN 202011623642**

(71) Applicants:
• **Aulton New Energy Automotive Technology
Group
Guangzhou, Guangdong 510700 (CN)**

• **Shanghai Dianba New Energy Technology Co.,
Ltd.
Shanghai 201308 (CN)**

(72) Inventor: **WU, Junchan
Guangzhou, Guangdong 510700 (CN)**

(74) Representative: **Bittner, Bernhard
Hannke Bittner & Partner
Patent- und Rechtsanwälte mbB
Prüfeninger Strasse 1
93049 Regensburg (DE)**

(54)     **RECOMMENDATION METHOD AND SYSTEM FOR BATTERY SWAPPING STATION,
ELECTRONIC DEVICE AND STORAGE MEDIUM**

(57)     Disclosed in the present invention are a recommendation method and system for a battery swapping station, an electronic device and a storage medium. Said method comprises: acquiring candidate battery swapping stations matching a vehicle of which the battery is to be swapped; estimating operation information of each candidate battery swapping station when said vehicle reaches the candidate battery swapping station from the current position; and according to the estimated operation information, recommending a battery swapping station to the user driving said vehicle. The present invention can estimate estimated operation information of a candidate battery swapping station when a vehicle reaches a candidate battery swapping station, and provides, for a user, battery swapping station recommendation based on the estimated operation information, without the need of a user predetermining by himself/herself the situation of the candidate battery swapping station at arrival, thereby easily avoiding the occurrence of mis-determination, and improving the accuracy of recommendation of a battery swapping station.

```
┌─────────────────────────────────────────┐
│ Acquire candidate battery swapping       │──── 11
│ stations matched with a vehicle awaiting │
│ battery swapping                         │
└─────────────────────────────────────────┘
                    │
                    ▼
┌─────────────────────────────────────────┐
│ Respectively estimate operation          │
│ information of each candidate battery     │──── 12
│ swapping station when the vehicle         │
│ awaiting battery swapping arrives at each │
│ candidate battery swapping station from a │
│ current position                          │
└─────────────────────────────────────────┘
                    │
                    ▼
┌─────────────────────────────────────────┐
│ Recommend a battery swapping station to a │
│ driving user of the vehicle awaiting      │──── 13
│ battery swapping according to the         │
│ estimated operation information           │
└─────────────────────────────────────────┘
```

FIG. 1

EP 4 273 768 A1

**Description**

The present application claims the priorities of Chinese Patent Application No. 2020116236429 filed on Dec. 31, 2020 and Chinese Patent Application No. 2020116236096 filed on Dec. 31, 2020, the contents of which are incorporated herein by reference in their entireties.

TECHNICAL FIELD

The present disclosure belongs to the field of battery swapping station navigation, and particularly relates to a battery swapping station recommendation method and system, an electronic device and a storage medium.

BACKGROUND

In order to provide better experience for users in need of battery swapping, some battery swapping station navigation software will recommend battery swapping stations to the users so as to guide them to select the battery swapping station. At present, recommended battery swapping stations are all given based on their current operations, such as the number of current available batteries, the current queue number, and the like. For example, a user is guided to a battery swapping station with the largest number of current available batteries or the smallest current queue number.

However, in practical applications, it can be found that since it takes time for a user to arrive at a battery swapping station, the conditions of the battery swapping station after the user arrives at the battery swapping station are probably inconsistent with those when a recommendation is given. Therefore, if the user selects the optimal recommended battery swapping station according to the result recommended by the navigation software, the conditions of no available battery and a need of queue in the battery swapping station may occur after the user arrives at the battery swapping station, so that the battery swapping requirement of the user still cannot be met quickly. In order to avoid such conditions, users need to prejudge the conditions before they arrive at the battery swapping station and select the optimal battery swapping station. However, the prejudgment of the users is usually made considering their own experience, so a misjudgment is easy to occur.

CONTENT OF THE PRESENT INVENTION

The present disclosure aims to solve the technical problem that in the prior art, the battery swapping station recommendation is usually given based on the current operations of a battery swapping station and does not accord with the actual conditions of the battery swapping station after a user arrives at the battery swapping station, so the user needs to prejudge the conditions before he/she arrives at the battery swapping station, very likely leading to a misjudgment. Therefore, provided are a battery swapping station recommendation method and system, an electronic device and a storage medium.

The present disclosure solves the above-mentioned technical problem by the following technical solution:

The present disclosure provides a battery swapping station recommendation method, which comprises the following steps:

acquiring candidate battery swapping stations matched with a vehicle awaiting battery swapping;
respectively estimating operation information of each candidate battery swapping station when the vehicle awaiting battery swapping arrives at each candidate battery swapping station from a current position; and
recommending a battery swapping station to a driving user of the vehicle awaiting battery swapping according to the estimated operation information.

The above-mentioned method can estimate the operation information of the candidate battery swapping station when the vehicle arrives at the candidate battery swapping station, and provide a battery swapping station recommendation for a user based on the estimated operation information, without the need of the user prejudging by himself/herself the conditions of the candidate battery swapping station before the vehicle arrives at the candidate battery swapping station, thereby easily avoiding the occurrence of misjudgment, and improving the accuracy of the battery swapping station recommendation.

Preferably, acquiring the candidate battery swapping stations matched with the vehicle awaiting battery swapping comprises:

acquiring a real-time positioning position, a vehicle type and a real-time residual electric quantity of the vehicle awaiting battery swapping;
picking out battery swapping stations matched with the real-time positioning position and the vehicle type; and
picking out from the battery swapping stations, according to the real-time residual electric quantity, the candidate battery swapping stations located within an endurance mileage of the vehicle awaiting battery swapping.

Through the above-mentioned steps, the candidate battery swapping stations which are matched with the real-time positioning position and the vehicle type of the vehicle awaiting battery swapping and are located within the endurance mileage of the vehicle awaiting battery swapping can be picked out, so that when a battery swapping station is recommended for a driving user based on the picked battery swapping stations, the battery swapping station recommended for the driving user can be guaranteed to be the battery swapping station at which the driving user can arrive and which has available batteries for swapping, thereby ensuring that the battery swapping requirement of the battery swapping user is met.

Preferably, picking out from the battery swapping stations, according to the real-time residual electric quantity, the candidate battery swapping stations located within the endurance mileage of the vehicle awaiting battery swapping comprises:

performing the following steps for each battery swapping station:
determining a traveling route and a driving mileage of the vehicle awaiting battery swapping from a current position to the battery swapping station;
calculating, according to the traveling route and the driving mileage, a congestion coefficient of the vehicle awaiting battery swapping from the current position to the battery swapping station;
estimating, according to a rated electric quantity, a mileage per kilowatt-hour, the real-time residual electric quantity and the congestion coefficient of the vehicle awaiting battery swapping, an endurance mileage of the vehicle awaiting battery swapping traveling to the battery swapping station according to the traveling route; and
selecting, when the endurance mileage reaches the driving mileage, the battery swapping station as a candidate battery swapping station.

The above-mentioned steps give a specific mode for predicting the endurance mileage and also consider the possible congestion condition in an actual driving scene, so the accuracy of prediction in the endurance mileage is improved, and then the candidate battery swapping stations within the endurance mileage of the vehicle awaiting battery swapping can be picked out more accurately.

Preferably, the calculation formula of the congestion coefficient is as follows:

$$a = \frac{\sum_{i=1}^{n} T_i * S_i}{D}$$

In the formula, a represents the congestion coefficient, $D$ represents the driving mileage, $i$ represents the number of traffic congestion states corresponding to each road section in the traveling route, $T_i$ represents a congestion state coefficient, and $S_i$ represents a length of a road section corresponding to $T_i$.

In the embodiment, a specific calculation formula of the congestion coefficient is given, and different traffic congestion conditions of different road sections are specifically considered, so the accuracy and the reliability of the congestion coefficient are improved.

Preferably, the estimated operation information comprises a predicted number of available batteries when the vehicle awaiting battery swapping arrives at the candidate battery swapping station; respectively estimating the operation information of each candidate battery swapping station when the vehicle awaiting battery swapping arrives at each candidate battery swapping station from the current position comprises:

performing the following steps for each candidate battery swapping station:
estimating a traveling duration of the vehicle awaiting battery swapping arriving at the candidate battery swapping station;
acquiring a current number of real-time available batteries of the candidate battery swapping station and a number of newly-added fully-charged batteries of the candidate battery swapping station within the traveling duration;
determining a total number of available batteries when the vehicle awaiting battery swapping arrives at the candidate battery swapping station according to the number of real-time available batteries and the number of newly-added fully-charged batteries;
acquiring an estimated battery swapping frequency of the candidate battery swapping station within the traveling duration; and
determining the predicted number of available batteries according to the total number of available batteries and the estimated battery swapping frequency.

In the technical solution, the estimated operation information of the candidate battery swapping station is reflected at least by the predicted number of available batteries when the vehicle awaiting battery swapping arrives at the candidate battery swapping station, so that when a battery swapping station is recommended based on the estimated operation information of the candidate battery swapping stations, a battery swapping user can be recommended to go to a station with relatively more batteries based on the predicted number of available batteries, and therefore the battery swapping requirement of the battery swapping user can be quickly met.

Preferably, estimating the traveling duration of the vehicle awaiting battery swapping arriving at the candidate battery swapping station comprises:

acquiring a traveling route of the vehicle awaiting battery swapping arriving at the candidate battery swapping station;
determining a total traveling distance of the traveling route, and a length of a road section with each congestion state on the traveling route and a congestion state coefficient; and
determining the traveling duration of the vehicle awaiting battery swapping arriving at the candidate battery swapping station according to the total traveling distance, the length of the road section with each congestion state on the traveling route and the congestion state coefficient.

The above-mentioned steps give a specific mode for estimating the traveling duration of the vehicle awaiting battery swapping arriving at the candidate battery swapping station and also consider the possible congestion condition in an actual driving scene, so the accuracy of estimation in the traveling duration is improved, and then the predicted number of available batteries of the battery swapping station, when the vehicle awaiting battery swapping arrives at the candidate battery swapping station, can be estimated more accurately.

Preferably, acquiring the estimated battery swapping frequency of the candidate battery swapping station within the traveling duration comprises:

acquiring a current queue number of the candidate battery swapping station and a reference battery swapping frequency within a historical corresponding period from a current moment to the arrival of the vehicle awaiting battery swapping; and
selecting the larger one of the current queue number and the reference battery swapping frequency within a historical corresponding period as the estimated battery swapping frequency of the candidate battery swapping station within the traveling duration.

The above-mentioned steps comprehensively consider the current queue number of the candidate battery swapping station and the reference battery swapping frequency within a historical corresponding period from the current moment to the arrival of the vehicle awaiting battery swapping when the estimated battery swapping frequency is determined, so the accuracy of the estimated battery swapping frequency is improved, and then the predicted number of available batteries of the battery swapping station when the vehicle awaiting battery swapping arrives at the candidate battery swapping station can be estimated more accurately.

Preferably, recommending the battery swapping station to the driving user of the vehicle awaiting battery swapping according to the estimated operation information comprises:
recommending a battery swapping station with the predicted number of available batteries greater than zero to the driving user of the vehicle awaiting battery swapping.

Through the above-mentioned steps, the method guides the user to preferentially select a candidate battery swapping station with the predicted number of available batteries greater than 0 based on a battery swapping station recommendation list, and helps the user to complete battery swapping rapidly.

Preferably, acquiring the candidate battery swapping stations matched with the vehicle awaiting battery swapping comprises:

acquiring alternative battery swapping stations matched with a vehicle type of the vehicle awaiting battery swapping within a target search range; and picking out from the alternative battery swapping stations, according to the residual battery electric quantity of the vehicle awaiting battery swapping, the reference mileage per kilowatt-hour and a traveling path of the vehicle awaiting battery swapping away from each alternative battery swapping station, candidate battery swapping stations at which the vehicle awaiting battery swapping can arrive based on the residual battery electric quantity.

Through the above-mentioned steps, the battery swapping stations matched with the vehicle type of the vehicle awaiting battery swapping within the target search range are used as the alternative battery swapping stations, the alternative battery swapping stations at which the vehicle awaiting battery swapping can arrive based on the residual battery electric quantity are used as the candidate battery swapping stations, and then the battery swapping stations at which the vehicle awaiting battery swapping can arrive and which have matched available batteries for swapping are picked out, so that when a battery swapping station is recommended for a driving user based on the picked battery swapping stations, the battery swapping station recommended for the driving user can be guaranteed to be the battery swapping station at which the driving user can arrive and which has available batteries for swapping, thereby ensuring that the battery swapping requirement of the battery swapping user is met.

Preferably, the estimated operation information comprises a predicted queue number when the vehicle awaiting battery swapping arrives at the candidate battery swapping station; respectively estimating the operation information of each candidate battery swapping station when the vehicle awaiting battery swapping arrives at each candidate battery swapping station from the current position comprises:

performing the following steps for each candidate battery swapping station:
estimating a traveling duration of the vehicle awaiting battery swapping arriving at the candidate battery swapping station;
estimating a required battery swapping frequency of the candidate battery swapping station within the traveling duration;
estimating an actual battery swapping frequency of the candidate battery swapping station within the traveling duration;
estimating a predicted number of available batteries of the candidate battery swapping station when the vehicle awaiting battery swapping arrives at the candidate battery swapping station;
determining an arrival queue number when the vehicle awaiting battery swapping arrives at the candidate battery swapping station according to the required battery swapping frequency and the actual battery swapping frequency; and
determining a predicted queue number according to the arrival queue number and the predicted number of available batteries.

In the technical solution, the estimated operation information of the candidate battery swapping station is reflected at least by the predicted queue number when the vehicle awaiting battery swapping arrives at the candidate battery swapping station, so that when a battery swapping station is recommended based on the estimated operation information of the candidate battery swapping stations, a battery swapping user can be recommended to go to a relatively idle station based on the predicted queue number, and therefore the battery swapping requirement of the battery swapping user can be quickly met, and the operation load of stations in rush hours can also be balanced.

Preferably, estimating the actual battery swapping frequency of the candidate battery swapping station within the traveling duration comprises:

estimating an ideal battery swapping frequency of the candidate battery swapping station within the traveling duration;
selecting, when the predicted number of available batteries is greater than or equal to 0, the smaller one of the ideal battery swapping frequency and the required battery swapping frequency as the actual battery swapping frequency; and
selecting, when the predicted number of available batteries is less than 0, the smaller one of the ideal battery swapping frequency and the total number of available batteries as the actual battery swapping frequency, wherein the total number of available batteries is relevant to the current number of real-time available batteries of the candidate battery swapping station and the number of newly-added fully-charged batteries of the candidate battery swapping station within the traveling duration.

The above-mentioned steps fully consider a specific algorithm for estimating the actual battery swapping frequency in different scenes with the predicted number of available batteries greater than or equal to 0 and less than 0, so the accuracy of estimation in the actual battery swapping frequency is improved.

Preferably, estimating the ideal battery swapping frequency of the candidate battery swapping station within the traveling duration comprises:

acquiring a single battery swapping duration of the candidate battery swapping station and a number of battery swapping channels of the candidate battery swapping station; and
estimating the ideal battery swapping frequency of the candidate battery swapping station within the traveling duration according to the traveling duration, the single battery swapping duration and the number of battery swapping channels.

The above-mentioned steps give a specific mode for estimating the ideal battery swapping frequency, and thus the method has the advantage of accurate estimation.

Preferably, determining the predicted queue number according to the arrival queue number and the predicted number of available batteries comprises:

when the predicted number of available batteries is greater than 0 and the arrival queue number is less than or equal to 0, determining that the predicted queue number is equal to 0; and
when the predicted number of available batteries is greater than 0 and the arrival queue number is greater than 0, taking the arrival queue number as the predicted queue number.

The above-mentioned steps fully consider a specific algorithm for determining the predicted queue number in different scenes with the predicted number of available batteries greater than 0 and the arrival queue number less than or equal to 0 or greater than 0, so the accuracy of estimation in the predicted queue number is improved.

Preferably, the estimated operation information further comprises a predicted queue duration when the vehicle awaiting battery swapping arrives at the candidate battery swapping station; when the predicted queue number is equal to 0, the predicted queue duration is equal to 0; when the predicted queue number is the arrival queue number, the predicted queue duration is determined according to the arrival queue number, the single battery swapping duration and the number of battery swapping channels of the candidate battery swapping station.

The above-mentioned steps fully consider a specific algorithm for determining the predicted queue duration in different scenes with the predicted queue number equal to 0 or being the arrival queue number, so the accuracy of estimation in the predicted queue duration is improved.

Preferably, determining the predicted queue number according to the arrival queue number and the predicted number of available batteries comprises:

when the predicted number of available batteries is less than or equal to 0 and the arrival queue number is less than or equal to 0, determining that the predicted queue number is equal to 0; and
when the predicted number of available batteries is less than or equal to 0 and the arrival queue number is greater than 0, taking the arrival queue number as the predicted queue number.

The above-mentioned steps fully consider a specific algorithm for determining the predicted queue number in different scenes with the predicted number of available batteries less than or equal to 0 and the arrival queue number less than or equal to 0 or greater than 0, so the accuracy of estimation in the predicted queue number is improved.

Preferably, the estimated operation information further comprises a predicted queue duration when the vehicle awaiting battery swapping arrives at the candidate battery swapping station; when the predicted queue number is equal to 0, the predicted queue duration is a residual charging duration of a battery which is not fully charged within the traveling duration and has the highest electric quantity; when the predicted queue number is the arrival queue number, the predicted queue duration is the smaller one of a first duration and a second duration, wherein the first duration is determined according to the arrival queue number, the single battery swapping duration and the number of battery swapping channels of the candidate battery swapping station, and the second duration is the $(k+1)^{th}$ residual charging duration of a battery which is currently not fully charged according to the residual charging duration in an ascending order, where k is the arrival queue number.

The above-mentioned steps fully consider a specific algorithm for determining the predicted queue duration in different scenes with the predicted queue number equal to 0 or being the arrival queue number, so the accuracy of estimation in the predicted queue duration is improved.

Preferably, the estimated operation information comprises a predicted number of available batteries and a predicted battery swapping consumption duration when the vehicle awaiting battery swapping arrives at the candidate battery swapping station, the battery swapping consumption duration including a traveling duration and a predicted queue duration when the vehicle awaiting battery swapping arrives at the candidate battery swapping station; recommending the battery swapping station to the driving user of the vehicle awaiting battery swapping according to the estimated operation information comprises:

sequencing the candidate battery swapping stations with the predicted number of available batteries greater than or equal to 0 according to the battery swapping consumption duration in an ascending order to generate a first battery swapping station recommendation list;
sequencing the candidate battery swapping stations with the predicted number of available batteries less than 0 according to the battery swapping consumption duration in an ascending order to generate a second battery swapping station recommendation list;
splicing the second battery swapping station recommendation list to the first battery swapping station recommendation list to obtain a battery swapping station recommendation list; and
recommending a battery swapping station to a driving user of the vehicle awaiting battery swapping according to the battery swapping station recommendation list.

Through the above-mentioned steps, the method guides the user to preferentially select a candidate battery swapping station with the predicted number of available batteries greater than or equal to 0 and the shortest battery swapping consumption duration based on the battery swapping station recommendation list, and helps the user to complete battery swapping rapidly.

The present disclosure further provides a battery swapping station recommendation system, which comprises:

a battery swapping station acquisition module, configured to acquire candidate battery swapping stations matched with a vehicle awaiting battery swapping;
an operation estimation module, configured to respectively estimate operation information of each candidate battery swapping station when the vehicle awaiting battery swapping arrives at each candidate battery swapping station from a current position; and
a battery swapping station recommendation module, configured to recommend a battery swapping station to a driving user of the vehicle awaiting battery swapping according to the estimated operation information.

Preferably, the battery swapping station acquisition module is configured to:

acquire a real-time positioning position, a vehicle type and a real-time residual electric quantity of the vehicle awaiting battery swapping;
pick out battery swapping stations matched with the real-time positioning position and the vehicle type; and
pick out from the battery swapping stations, according to the real-time residual electric quantity, the candidate battery swapping stations located within an endurance mileage of the vehicle awaiting battery swapping.

Preferably, picking out from the battery swapping stations, according to the real-time residual electric quantity, the candidate battery swapping stations located within the endurance mileage of the vehicle awaiting battery swapping comprises:

for each battery swapping station, performing the following functions:
determining a traveling route and a driving mileage of the vehicle awaiting battery swapping from a current position to the battery swapping station;

calculating, according to the traveling route and the driving mileage, a congestion coefficient of the vehicle awaiting battery swapping from the current position to the battery swapping station;

estimating, according to a rated electric quantity, a mileage per kilowatt-hour, the real-time residual electric quantity and the congestion coefficient of the vehicle awaiting battery swapping, an endurance mileage of the vehicle awaiting battery swapping traveling to the battery swapping station according to the traveling route; and

selecting, when the endurance mileage reaches the driving mileage, the battery swapping station as a candidate battery swapping station.

Preferably, the calculation formula of the congestion coefficient is as follows:

$$a = \frac{\sum_{i=1}^{n} T_i * S_i}{D}$$

In the formula, a represents the congestion coefficient, D represents the driving mileage, $i$ represents the number of traffic congestion states corresponding to each road section in the traveling route, $T_i$ represents the congestion state coefficient, and $S_i$ represents the length of the road section corresponding to $T_i$.

Preferably, the estimated operation information comprises a predicted number of available batteries when the vehicle awaiting battery swapping arrives at the candidate battery swapping station; the operation estimation module is configured to:

for each candidate battery swapping station, perform the following functions:

estimating a traveling duration of the vehicle awaiting battery swapping arriving at the candidate battery swapping station;

acquiring a current number of real-time available batteries of the candidate battery swapping station and a number of newly-added fully-charged batteries of the candidate battery swapping station within the traveling duration;

determining a total number of available batteries when the vehicle awaiting battery swapping arrives at the candidate battery swapping station according to the number of real-time available batteries and the number of newly-added fully-charged batteries;

acquiring an estimated battery swapping frequency of the candidate battery swapping station within the traveling duration; and

determining the predicted number of available batteries according to the total number of available batteries and the estimated battery swapping frequency.

Preferably, estimating the traveling duration of the vehicle awaiting battery swapping arriving at the candidate battery swapping station comprises:

acquiring a traveling route of the vehicle awaiting battery swapping arriving at the candidate battery swapping station;

determining a total traveling distance of the traveling route, and a length of a road section with each congestion state on the traveling route and a congestion state coefficient; and

determining the traveling duration of the vehicle awaiting battery swapping arriving at the candidate battery swapping station according to the total traveling distance, the length of the road section with each congestion state on the traveling route and the congestion state coefficient.

Preferably, acquiring the estimated battery swapping frequency of the candidate battery swapping station within the traveling duration comprises:

acquiring a current queue number of the candidate battery swapping station and a reference battery swapping frequency within a historical corresponding period from a current moment to the arrival of the vehicle awaiting battery swapping; and

selecting the larger one of the current queue number and the reference battery swapping frequency within a historical corresponding period as the estimated battery swapping frequency of the candidate battery swapping station within the traveling duration.

Preferably, the battery swapping station recommendation module is configured to:

recommend a battery swapping station with the predicted number of available batteries greater than zero to the driving user of the vehicle awaiting battery swapping.

Preferably, the battery swapping station acquisition module is configured to:

acquire alternative battery swapping stations matched with a vehicle type of the vehicle awaiting battery swapping within a target search range; and

pick out from the alternative battery swapping stations, according to the residual battery electric quantity of the vehicle awaiting battery swapping, the reference mileage per kilowatt-hour and a traveling path of the vehicle awaiting battery swapping away from each alternative battery swapping station, candidate battery swapping stations at which the vehicle awaiting battery swapping can arrive based on the residual battery electric quantity.

Preferably, the estimated operation information comprises a predicted queue number when the vehicle awaiting battery swapping arrives at the candidate battery swapping station; the operation estimation module is configured to:

for each candidate battery swapping station, perform the following functions:

estimating a traveling duration of the vehicle awaiting battery swapping arriving at the candidate battery swapping station and a predicted number of available batteries;

estimating a required battery swapping frequency of the candidate battery swapping station within the traveling duration;

estimating an actual battery swapping frequency of the candidate battery swapping station within the traveling duration;

determining an arrival queue number when the vehicle awaiting battery swapping arrives at the candidate battery swapping station according to the required battery swapping frequency and the actual battery swapping frequency; and

determining a predicted queue number according to the arrival queue number and the predicted number of available batteries.

Preferably, estimating the actual battery swapping frequency of the candidate battery swapping station within the traveling duration comprises:

estimating an ideal battery swapping frequency of the candidate battery swapping station within the traveling duration;

selecting, when the predicted number of available batteries is greater than or equal to 0, the smaller one of the ideal battery swapping frequency and the required battery swapping frequency as the actual battery swapping frequency; and

selecting, when the predicted number of available batteries is less than 0, the smaller one of the ideal battery swapping frequency and the total number of available batteries as the actual battery swapping frequency, wherein the total number of available batteries is relevant to the current number of real-time available batteries of the candidate battery swapping station and the number of newly-added fully-charged batteries of the candidate battery swapping station within the traveling duration.

Preferably, estimating the ideal battery swapping frequency of the candidate battery swapping station within the traveling duration comprises:

acquiring a single battery swapping duration of the candidate battery swapping station and a number of battery swapping channels of the candidate battery swapping station; and

estimating the ideal battery swapping frequency of the candidate battery swapping station within the traveling duration according to the traveling duration, the single battery swapping duration and the number of battery swapping channels.

Preferably, determining the predicted queue number according to the arrival queue number and the predicted number of available batteries comprises:

when the predicted number of available batteries is greater than 0 and the arrival queue number is less than or equal to 0, determining that the predicted queue number is equal to 0; and

when the predicted number of available batteries is greater than 0 and the arrival queue number is greater than 0, taking the arrival queue number as the predicted queue number.

Preferably, the estimated operation information further comprises a predicted queue duration when the vehicle awaiting battery swapping arrives at the candidate battery swapping station; when the predicted queue number is equal to 0, the predicted queue duration is equal to 0; when the predicted queue number is the arrival queue number, the predicted queue duration is determined according to the arrival queue number, the single battery swapping duration and the number of battery swapping channels of the candidate battery swapping station.

Preferably, determining the predicted queue number according to the arrival queue number and the predicted number of available batteries comprises:

when the predicted number of available batteries is less than or equal to 0 and the arrival queue number is less than or equal to 0, determining that the predicted queue number is equal to 0; and

when the predicted number of available batteries is less than or equal to 0 and the arrival queue number is greater than 0, taking the arrival queue number as the predicted queue number.

Preferably, the estimated operation information further comprises a predicted queue duration when the vehicle awaiting battery swapping arrives at the candidate battery swapping station; when the predicted queue number is equal to 0, the predicted queue duration is a residual charging duration of a battery which is not fully charged within the traveling duration and has the highest electric quantity; when the predicted queue number is the arrival queue number, the predicted queue duration is the smaller one of a first duration and a second duration, wherein the first duration is determined according to the arrival queue number, the single battery swapping duration and the number of battery swapping channels of the candidate battery swapping station, and the second duration is the $(k+1)^{th}$ residual charging duration of a battery which is currently not fully charged according to the residual charging duration in an ascending order, where k is the arrival queue number.

Preferably, the estimated operation information comprises a predicted number of available batteries and a predicted battery swapping consumption duration when the vehicle awaiting battery swapping arrives at the candidate battery swapping station, the battery swapping consumption duration including a traveling duration and a predicted queue duration when the vehicle awaiting battery swapping arrives at the candidate battery swapping station; the battery swapping station recommendation module is configured to:

sequence the candidate battery swapping stations with the predicted number of available batteries greater than or equal to 0 according to the battery swapping consumption duration in an ascending order to generate a first battery swapping station recommendation list;

sequence the candidate battery swapping stations with the predicted number of available batteries less than 0 according to the battery swapping consumption duration in an ascending order to generate a second battery swapping station recommendation list;

splice the second battery swapping station recommendation list to the first battery swapping station recommendation list to obtain a battery swapping station recommendation list; and

recommend a battery swapping station to a driving user of the vehicle awaiting battery swapping according to the battery swapping station recommendation list.

The present disclosure further provides an electronic device, which comprises a memory, a processor and a computer program stored on the memory and executable on the processor, the processor, when executing the computer program, implementing the battery swapping station recommendation method described above.

The present disclosure further provides a computer-readable storage medium having a computer program stored thereon, the computer program, when executed by a processor, implementing the steps of the battery swapping station recommendation method described above.

On the basis of the general knowledge in the art, the above preferred conditions can be combined arbitrarily to obtain preferred embodiments of the present disclosure.

The present disclosure has the following positive and progressive effect: the present disclosure can estimate the operation information of the candidate battery swapping station when the vehicle arrives at the candidate battery swapping station, and provide a battery swapping station recommendation for a user based on the estimated operation information, without the need of the user prejudging by himself/herself the conditions of the candidate battery swapping station before the vehicle arrives at the candidate battery swapping station, thereby easily avoiding the occurrence of misjudgment, and improving the accuracy of the battery swapping station recommendation.

BRIEF DESCRIPTION OF THE DRAWINGS

FIG. 1 is a flowchart of a battery swapping station recommendation method according to Embodiment 1 of the present disclosure.
FIG. 2 is a flowchart of step 11 in a battery swapping station recommendation method according to Embodiment 2 of the present disclosure.
FIG. 3 is a flowchart of step 12 in a battery swapping station recommendation method according to Embodiment 2 of the present disclosure.
FIG. 4 is a flowchart of step 11 in a battery swapping station recommendation method according to Embodiment 3 of the present disclosure.
FIG. 5 is a flowchart of step 12 in a battery swapping station recommendation method according to Embodiment 3 of the present disclosure.
FIG. 6 is a flowchart of step 1203 in a battery swapping station recommendation method according to Embodiment 3 of the present disclosure.
FIG. 7 is a flowchart of step 1206 in a battery swapping station recommendation method according to Embodiment 3 of the present disclosure.
FIG. 8 is a flowchart of an implementable manner of the battery swapping station recommendation method according to Embodiment 3 of the present disclosure.
FIG. 9 is a schematic diagram of modules of a battery swapping station recommendation system according to Embodiment 4 of the present disclosure.
FIG. 10 is a schematic structural diagram of an electronic device according to Embodiment 7 of the present disclosure.

DETAILED DESCRIPTION OF THE PREFERRED EMBODIMENT

The present disclosure is further illustrated by the following embodiments, which are not intended to limit the present disclosure.

**Embodiment 1**

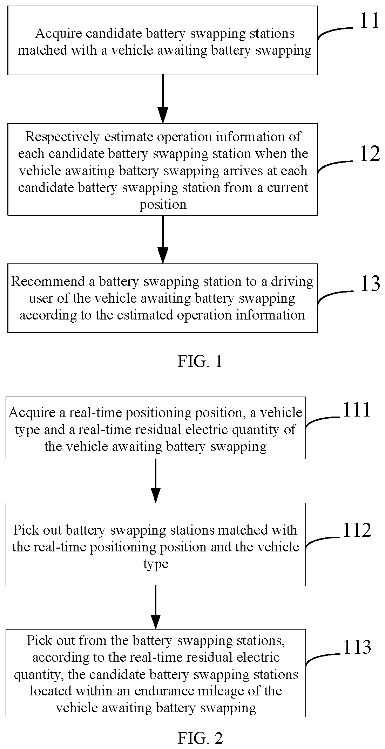

FIG. 1 shows a battery swapping station recommendation method according to this embodiment, which comprises the following steps:

step 11: acquiring candidate battery swapping stations matched with a vehicle awaiting battery swapping;
step 12: respectively estimating operation information of each candidate battery swapping station when the vehicle awaiting battery swapping arrives at each candidate battery swapping station from a current position; and
step 13: recommending a battery swapping station to a driving user of the vehicle awaiting battery swapping according to the estimated operation information.

The method in this embodiment can estimate the operation information of the candidate battery swapping station when the vehicle arrives at the candidate battery swapping station, and provide a battery swapping station recommendation for a user based on the estimated operation information, without the need of the user prejudging by himself/herself the conditions of the candidate battery swapping station before the vehicle arrives at the candidate battery swapping station, thereby easily avoiding the occurrence of misjudgment, and improving the accuracy of the battery swapping station recommendation.

**Embodiment 2**

The battery swapping station recommendation method in this embodiment is further improved based on Embodiment 1, and step 11 may specifically comprise the following steps, as shown in FIG. 2:

> step 111: acquiring a real-time positioning position, a vehicle type and a real-time residual electric quantity of the vehicle awaiting battery swapping;
> step 112: picking out battery swapping stations matched with the real-time positioning position and the vehicle type; and
> step 113: picking out from the battery swapping stations, according to the real-time residual electric quantity, the candidate battery swapping stations located within an endurance mileage of the vehicle awaiting battery swapping.

In step 111, the real-time positioning position of the vehicle awaiting battery swapping may be acquired by an on-board GPS or other positioning apparatuses, or may be acquired by a GPS or other positioning modules of the driving user terminal. The vehicle type may be acquired from the vehicle types registered in the driving user terminal. The real-time residual electric quantity may be acquired from a battery management system (BMS) of the vehicle awaiting battery swapping.

In step 112, the battery swapping stations matched with the real-time positioning position may include battery swapping stations located within a preset distance threshold from the real-time positioning position; the battery swapping stations matched with the vehicle type may include battery swapping stations supporting the battery swapping service provided for the vehicle awaiting battery swapping of the vehicle type.

Through the above-mentioned steps, the candidate battery swapping stations which are matched with the real-time positioning position and the vehicle type of the vehicle awaiting battery swapping and are located within the endurance mileage of the vehicle awaiting battery swapping can be picked out, so that when a battery swapping station is recommended for a driving user based on the picked battery swapping stations, the battery swapping station recommended for the driving user can be guaranteed to be the battery swapping station at which the driving user can arrive and which has available batteries for swapping, thereby ensuring that the battery swapping requirement of the battery swapping user is met.

In an implementable manner, step 112 may further comprise: picking out from the battery swapping stations, according to the real-time residual electric quantity and the operation state of the battery swapping station when the vehicle awaiting battery swapping arrives at the battery swapping station, candidate battery swapping stations which are located within an endurance mileage of the vehicle awaiting battery swapping and are in an in-operation state when the vehicle awaiting battery swapping arrives at the battery swapping station. In the step, the operation state includes an in-operation state and a suspended operation state. The operation state of the battery swapping station may be specifically determined according to the operation time of the battery swapping station. A battery swapping station, which is in an in-operation state when the vehicle awaiting battery swapping arrives at it, is selected as a candidate battery swapping station. Therefore, the situation that the battery swapping cannot be achieved when the battery swapping user arrives at the battery swapping station because the battery swapping station is in a suspended operation state can be avoided.

Furthermore, step 113 may comprise:

> performing the following steps for each battery swapping station:
> determining a traveling route and a driving mileage of the vehicle awaiting battery swapping from a current position to the battery swapping station;
> calculating, according to the traveling route and the driving mileage, a congestion coefficient of the vehicle awaiting battery swapping from the current position to the battery swapping station;
> estimating, according to a rated electric quantity, a mileage per kilowatt-hour, the real-time residual electric quantity and the congestion coefficient of the vehicle awaiting battery swapping, an endurance mileage of the vehicle awaiting battery swapping traveling to the battery swapping station according to the traveling route; and
> selecting, when the endurance mileage reaches the driving mileage, the battery swapping station as a candidate battery swapping station.

The above-mentioned steps give a specific mode for predicting the endurance mileage and also consider the possible congestion condition in an actual driving scene, so the accuracy of prediction in the endurance mileage is improved, and then the candidate battery swapping stations within the endurance mileage of the vehicle awaiting battery swapping can be picked out more accurately.

Still furthermore, the calculation formula of the congestion coefficient is as follows:

$$a = \frac{\sum_{i=1}^{n} T_i * S_i}{D}$$

In the formula, a represents the congestion coefficient, D represents the driving mileage, $i$ represents the number of traffic congestion states corresponding to each road section in the traveling route, $T_i$ represents a congestion state coefficient (unknown = 1.0/clear = 1.0/crawl = 1.5/jam = 2.1/standstill = 2.5), and $S_i$ represents a length of a road section corresponding to $T_i$.

Where one possible calculation formula of the endurance mileage is as follows: endurance mileage = (real-time residual electric quantity $\times \cdot$ rated electric quantity/a) $\times$ mileage per kilowatt-hour/100. The calculation formula of the endurance mileage is not limited to this, and it may also be obtained by using the above-mentioned calculation formula after further correcting the real-time residual electric quantity and the mileage per kilowatt-hour or introducing an error amount, or by further correcting or introducing the error amount based on the above-mentioned calculation result.

In the embodiment, a specific calculation formula of the congestion coefficient is given, and different traffic congestion conditions of different road sections are specifically considered, so the accuracy and the reliability of the congestion coefficient are improved. In an implementable manner, the mileage per kilowatt-hour is a mileage traveled by the vehicle awaiting battery swapping when the battery pack consumes a unit electric quantity (1 degree), and may be determined according to the driving mileage of the vehicle awaiting battery swapping and an accumulated consumed electric quantity of the battery pack within a certain period of time. The mileage per kilowatt-hour of the vehicles awaiting battery swapping of different vehicle types is different.

In an implementable manner, the estimated operation information comprises a predicted number of available batteries when the vehicle awaiting battery swapping arrives at the candidate battery swapping station; step 12 may specifically comprise:

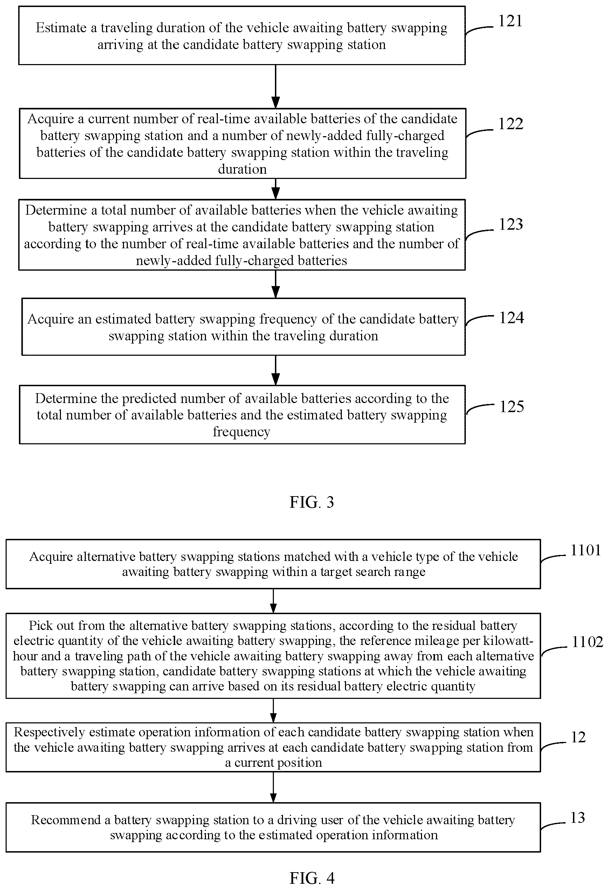

performing the following steps for each candidate battery swapping station, as shown in FIG. 3:

step 121: estimating a traveling duration of the vehicle awaiting battery swapping arriving at the candidate battery swapping station;
step 122: acquiring a current number of real-time available batteries of the candidate battery swapping station and a number of newly-added fully-charged batteries of the candidate battery swapping station within the traveling duration;

step 123: determining a total number of available batteries when the vehicle awaiting battery swapping arrives at the candidate battery swapping station according to the number of real-time available batteries and the number of newly-added fully-charged batteries;
step 124: acquiring an estimated battery swapping frequency of the candidate battery swapping station within the traveling duration; and
step 125: determining the predicted number of available batteries according to the total number of available batteries and the estimated battery swapping frequency.

In this implementable manner, the estimated operation information of the candidate battery swapping station is reflected at least by the predicted number of available batteries when the vehicle awaiting battery swapping arrives at the candidate battery swapping station, so that when a battery swapping station is recommended based on the estimated operation information of the candidate battery swapping stations, a battery swapping user can be recommended to go to a station with relatively more batteries based on the predicted number of available batteries, and therefore the battery swapping requirement of the battery swapping user can be quickly met.

Furthermore, step 121 may comprise:

acquiring a traveling route of the vehicle awaiting battery swapping arriving at the candidate battery swapping station;
determining a total traveling distance of the traveling route, and a length of a road section with each congestion state on the traveling route and a congestion state coefficient; and
determining the traveling duration of the vehicle awaiting battery swapping arriving at the candidate battery swapping station according to the total traveling distance, the length of the road section with each congestion state on the traveling route and the congestion state coefficient.

Where one possible calculation formula of the traveling duration is as follows:

$$T = \sum_{i=1}^{n} T_i * \frac{S_i}{v}$$

In the formula, v represents the traveling speed of the vehicle awaiting battery swapping in a clear state.

The above-mentioned steps give a specific mode for estimating the traveling duration of the vehicle awaiting battery swapping arriving at the candidate battery swapping station and also consider the possible congestion condition in an actual driving scene, so the accuracy of estimation in the traveling duration is improved, and then the predicted number of available batteries of the battery swapping station, when the vehicle awaiting battery swapping arrives at the candidate battery swapping station, can be estimated more accurately.

In step 122, the number of real-time available batteries and the number of newly-added fully-charged batteries may be acquired from a battery charging management system of the candidate battery swapping station. The number of newly-added fully-charged batteries may be equal to the number of current non-fully-charged batteries in the candidate battery swapping station with the residual charging duration less than the traveling duration, or equal to a correction value based on the value.

In step 123, one possible calculation formula of the total number of available batteries is as follows: the total number of available batteries = the number of real-time available batteries + the number of newly-added fully-charged batteries, or a correction value based on the calculation value.

Furthermore, step 124 may comprise:

acquiring a current queue number of the candidate battery swapping station and a reference battery swapping frequency within a historical corresponding period from a current moment to the arrival of the vehicle awaiting battery swapping; and
selecting the larger one of the current queue number and the reference battery swapping frequency within a historical corresponding period as the estimated battery swapping frequency of the candidate battery swapping station within the traveling duration.

In step 125, one possible calculation formula of the predicted number of available batteries is as follows: the predicted number of available batteries = the total number of available batteries - the estimated battery swapping frequency, or a correction value based on the calculation value.

The above-mentioned steps comprehensively consider the current queue number of the candidate battery swapping station and the reference battery swapping frequency within a historical corresponding period from the current moment to the arrival of the vehicle awaiting battery swapping when the estimated battery swapping frequency is determined, so the accuracy of the estimated battery swapping frequency is improved, and then the predicted number of available batteries of the battery swapping station when the vehicle awaiting battery swapping arrives at the candidate battery swapping station can be estimated more accurately.

Furthermore, step 13 may comprise:
recommending a battery swapping station with the predicted number of available batteries greater than zero to the driving user of the vehicle awaiting battery swapping.

In the step, the candidate battery swapping stations with the predicted number of available batteries greater than 0 may be sequenced according to the battery swapping consumption duration in an ascending order to generate a first battery swapping station recommendation list, and a battery swapping station is recommended to a driving user of the vehicle awaiting battery swapping according to the first battery swapping station recommendation list. After the first battery swapping station recommendation list is generated according to the battery swapping consumption duration in an ascending order, the following steps are performed:

sequencing the candidate battery swapping stations with the predicted number of available batteries less than or equal to 0 according to the battery swapping consumption duration in an ascending order to generate a second battery swapping station recommendation list;
splicing the second battery swapping station recommendation list to the first battery swapping station recommendation list to obtain a battery swapping station recommendation list; and
recommending a battery swapping station to a driving user of the vehicle awaiting battery swapping according to the battery swapping station recommendation list.

Through the above-mentioned steps, the method guides the user to preferentially select a candidate battery swapping station with the predicted number of available batteries greater than 0 and the shortest battery swapping consumption duration based on the battery swapping station recommendation list, and helps the user to complete battery swapping rapidly.

In an implementable manner, when a battery swapping station is recommended to a driving user of the vehicle awaiting battery swapping according to the estimated operation information, battery swapping station information of the recommended battery swapping station may be output. The battery swapping station information includes, but is not limited to, at least one of a predicted number of available batteries, a predicted queue number, and a predicted queue duration.

**Embodiment 3**

The battery swapping station recommendation method in this embodiment is further improved based on Embodiment 1, and step 11 may specifically comprise the following steps, as shown in FIG. 4:

step 1101: acquiring alternative battery swapping stations matched with a vehicle type of the vehicle awaiting battery swapping within a target search range; and
step 1102: picking out from the alternative battery swapping stations, according to the residual battery electric quantity of the vehicle awaiting battery swapping, the reference mileage per kilowatt-hour and a traveling path of the vehicle awaiting battery swapping away from each alternative battery swapping station, candidate battery swapping stations at which the vehicle awaiting battery swapping can arrive based on the residual battery electric quantity.

In the step, the target search range may be an area range which is not more than a preset distance away from the current position of the vehicle awaiting battery swapping. The current position of the vehicle awaiting battery swapping may be acquired by an on-board GPS or other positioning apparatuses, or may be acquired by a GPS or other positioning modules of the driving user terminal. The alternative battery swapping stations matched with the vehicle type of the vehicle awaiting battery swapping may support the battery swapping service provided for the vehicle awaiting battery swapping of the vehicle type. The residual battery electric quantity may be acquired from a battery management system (BMS) of the vehicle awaiting battery swapping. The reference mileage per kilowatt-hour is a reference amount based on the mileage per kilowatt-hour, and may be directly equal to the mileage per kilowatt-hour, or may be a reference amount obtained by increasing or decreasing the mileage per kilowatt-hour to some extent. The traveling path of the vehicle awaiting battery swapping away from each alternative battery swapping station may be obtained by calling an interface of navigation map software.

In an implementable manner, the mileage per kilowatt-hour is a mileage traveled by the vehicle awaiting battery swapping when the battery pack consumes a unit electric quantity (1 degree), and may be determined according to the driving mileage of the vehicle awaiting battery swapping and an accumulated consumed electric quantity of the battery pack within a certain period of time. The mileage per kilowatt-hour of the vehicles awaiting battery swapping of different vehicle types is different.

Step 1102 may specifically comprise:

estimating a residual endurance mileage of the vehicle awaiting battery swapping according to the residual battery electric quantity of the vehicle awaiting battery swapping and the reference mileage per kilowatt-hour, wherein the residual endurance mileage = the residual battery electric quantity/the reference mileage per kilowatt-hour, or a correction value based on the calculation value;

determining an area range which can be reached by the vehicle awaiting battery swapping before the battery runs out according to the residual endurance mileage and the current position of the vehicle awaiting battery swapping;

acquiring a traveling path of the vehicle awaiting battery swapping away from each alternative battery swapping station; and

selecting alternative battery swapping stations with the traveling path in the area range as the candidate battery swapping stations.

Through steps 1101-1102, the battery swapping stations matched with the vehicle type of the vehicle awaiting battery swapping within the target search range are used as the alternative battery swapping stations, the alternative battery swapping stations at which the vehicle awaiting battery swapping can arrive based on the residual battery electric quantity are used as the candidate battery swapping stations, and then the battery swapping stations at which the vehicle awaiting battery swapping can arrive and which have matched available batteries for swapping are picked out, so that when a battery swapping stations is recommended for a driving user based on the picked battery swapping stations, the battery swapping station recommended for the driving user can be guaranteed to be the battery swapping station at which the driving user can arrive and which has available batteries for swapping, thereby ensuring that the battery swapping requirement of the battery swapping user is met.

In an implementable manner, step 1102 may further comprise: picking out from the alternative battery swapping stations, according to the residual battery electric quantity of the vehicle awaiting battery swapping, the reference mileage per kilowatt-hour, the traveling path of the vehicle awaiting battery swapping away from each alternative battery swapping station and the operation state of the alternative battery swapping stations when the vehicle awaiting battery swapping arrives at the alternative battery swapping stations, candidate battery swapping stations at which the vehicle awaiting battery swapping can arrive based on the residual battery electric quantity.

In the step, the operation state includes an in-operation state and a suspended operation state. The operation state of the alternative battery swapping stations may be specifically determined according to the operation time of the alternative battery swapping stations. An alternative battery swapping station, which is in an in-operation state when the vehicle awaiting battery swapping arrives at it, is selected as a candidate battery swapping station. Therefore, the situation that the battery swapping cannot be achieved when the battery swapping user arrives at the battery swapping station because the battery swapping station is in a suspended operation state can be avoided.

In an implementable manner, the estimated operation information comprises a predicted queue number when the vehicle awaiting battery swapping arrives at the candidate battery swapping station. Step 12 may comprise:

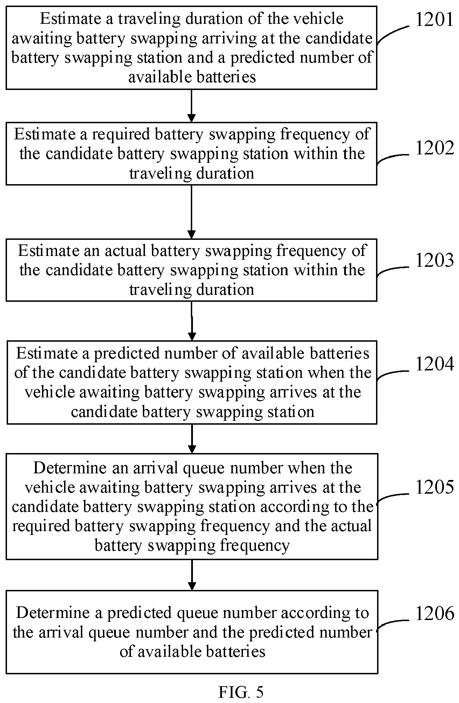

performing the following steps for each candidate battery swapping station, as shown in FIG. 5:

step 1201: estimating a traveling duration of the vehicle awaiting battery swapping arriving at the candidate battery swapping station;

step 1202: estimating a required battery swapping frequency of the candidate battery swapping station within the traveling duration;

step 1203: estimating an actual battery swapping frequency of the candidate battery swapping station within the traveling duration;

step 1204: estimating a predicted number of available batteries of the candidate battery swapping station when the vehicle awaiting battery swapping arrives at the candidate battery swapping station;

step 1205: determining an arrival queue number when the vehicle awaiting battery swapping arrives at the candidate battery swapping station according to the required battery swapping frequency and the actual battery swapping frequency; and

step 1206: determining a predicted queue number according to the arrival queue number and the predicted number of available batteries.

The term "available" in this embodiment means that the vehicle type of the vehicle awaiting battery swapping is available. If one candidate battery swapping station can support battery swapping for multiple vehicle types, the predicted number of available batteries refers to the predicted number of available batteries for the vehicles awaiting battery swapping of available vehicle types.

In step 1201, the step of estimating a traveling duration of the vehicle awaiting battery swapping arriving at the candidate battery swapping station may comprise:

acquiring a traveling route of the vehicle awaiting battery swapping arriving at the candidate battery swapping station;

determining a total traveling distance of the traveling route, and a length of a road section with each congestion state on the traveling route and a congestion state coefficient; and

determining the traveling duration of the vehicle awaiting battery swapping arriving at the candidate battery swapping station according to the total traveling distance, the length of the road section with each congestion state on the traveling route and the congestion state coefficient.

Where one possible calculation formula of the traveling duration is as follows:

$$ \mathrm{T} = \sum_{i=1}^{n} T_i * \frac{S_i}{v} $$

In the formula, T represents the traveling duration, i represents the number of traffic congestion states, $k_i$ represents the congestion state coefficient (unknown = 1.0/clear = 1.0/crawl = 1.5/jam = 2.1/standstill =2.5), $T_i$ represents the length of the road section corresponding to $k_i$, and v represents the traveling speed of the vehicle awaiting battery swapping in a clear state.

In step 1202, the required battery swapping frequency may be the larger one of the current queue number of the candidate battery swapping station and the reference battery swapping frequency within a historical corresponding period from the current moment to the arrival of the vehicle awaiting battery swapping (for example, the average battery swapping frequency of the candidate battery swapping station in the current contemporaneous period every day in the past month).

In step 1204, one possible calculation formula of the predicted number of available batteries is as follows: the predicted number of available batteries = the total number of available batteries - the estimated battery swapping frequency, or a correction value based on the calculation value.

In step 1205, one possible calculation formula of the arrival queue number is as follows: the arrival queue number = the required battery swapping frequency - the actual battery swapping frequency, or a correction value based on the calculation value.

In this embodiment, the estimated operation information of the candidate battery swapping station is reflected at least by the predicted queue number when the vehicle awaiting battery swapping arrives at the candidate battery swapping station, so that when a battery swapping station is recommended based on the estimated operation information of the candidate battery swapping stations, a battery swapping user can be recommended to go to a relatively idle station based on the predicted queue number, and therefore the battery swapping requirement of the battery swapping user can be quickly met, and the operation load of stations in rush hours can also be balanced.

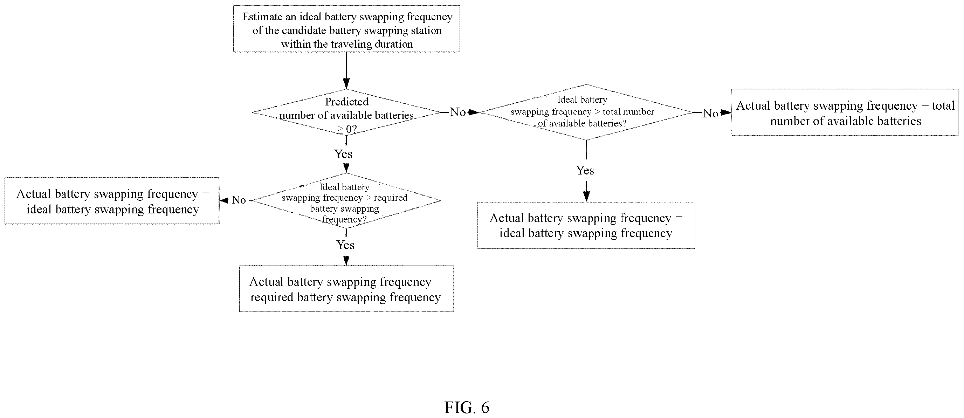

In an implementable manner, step 1203 may comprise the following steps, as shown in FIG. 6:

estimating an ideal battery swapping frequency of the candidate battery swapping station within the traveling duration; and

selecting, when the predicted number of available batteries is greater than or equal to 0, the smaller one of the ideal battery swapping frequency and the required battery swapping frequency as the actual battery swapping frequency; and

selecting, when the predicted number of available batteries is less than 0, the smaller one of the ideal battery swapping frequency and the total number of available batteries as the actual battery swapping frequency, wherein the total number of available batteries is relevant to the current number of real-time available batteries of the candidate battery swapping station and the number of newly-added fully-charged batteries of the candidate battery swapping station within the traveling duration.

In the step, one possible correlation formula between the total number of available batteries and the number of real-time available batteries and the number of newly-added fully-charged batteries may be as follows: the total number of available batteries = the number of real-time available batteries + the number of newly-added fully-charged batteries, or a correction value based on the calculation value. The number of real-time available batteries and the number of newly-added fully-charged batteries may be acquired from a battery charging management system of the candidate battery swapping station. The number of newly-added fully-charged batteries may be equal to the number of current non-fully-charged batteries in the candidate battery swapping station with the residual charging duration less than the traveling duration, or equal to a correction value based on the value.

The above-mentioned steps fully consider a specific algorithm for estimating the actual battery swapping frequency in different scenes with the predicted number of available batteries greater than or equal to 0 and less than 0, so the accuracy of estimation in the actual battery swapping frequency is improved.

In an implementable manner, estimating an ideal battery swapping frequency of the candidate battery swapping station within the traveling duration in step 1203 may comprise:

acquiring a single battery swapping duration of the candidate battery swapping station and a number of battery swapping channels of the candidate battery swapping station; and
estimating the ideal battery swapping frequency of the candidate battery swapping station within the traveling duration according to the traveling duration, the single battery swapping duration and the number of battery swapping channels.

In the step, the single battery swapping duration is the duration for the candidate battery swapping station completing a single battery swapping, and may be a standard value or an average value of the counted battery swapping durations for actual battery swapping for multiple times. The number of battery swapping channels represents the number of candidate battery swapping stations capable of performing battery swapping simultaneously. One possible calculation formula of the ideal battery swapping frequency is as follows: the ideal battery swapping frequency = the traveling duration × the number of battery swapping channels/the single battery swapping duration. The calculation formula of the ideal battery swapping frequency is not limited to this, and it may also be obtained by using the above-mentioned calculation formula after further correcting the traveling duration and the single battery swapping duration or introducing an error amount, or by further correcting or introducing the error amount based on the above-mentioned calculation result.

The above-mentioned steps give a specific mode for estimating the ideal battery swapping frequency, and thus the method has the advantage of accurate estimation.

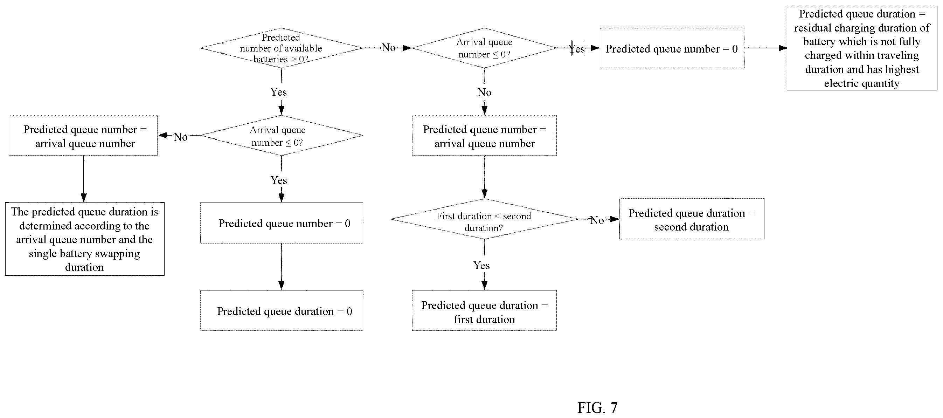

In an implementable manner, step 1206 may specifically comprise the following steps, as shown in FIG. 7:

when the predicted number of available batteries is greater than 0 and the arrival queue number is less than or equal to 0, determining that the predicted queue number is equal to 0; and
when the predicted number of available batteries is greater than 0 and the arrival queue number is greater than 0, taking the arrival queue number as the predicted queue number.

The above-mentioned steps fully consider a specific algorithm for determining the predicted queue number in different scenes with the predicted number of available batteries greater than 0 and the arrival queue number less than or equal to 0 or greater than 0, so the accuracy of estimation in the predicted queue number is improved.

In an implementable manner, the estimated operation information may further comprise a predicted queue duration when the vehicle awaiting battery swapping arrives at the candidate battery swapping station; when the predicted queue number is equal to 0, the predicted queue duration is equal to 0; when the predicted queue number is the arrival queue number, the predicted queue duration is determined according to the arrival queue number, the single battery swapping duration and the number of battery swapping channels of the candidate battery swapping station.

Where one possible calculation formula of the predicted queue duration is as follows: the predicted queue duration = the arrival queue number × the signal battery swapping duration/the number of battery swapping channels. The calculation formula of the predicted queue duration is not limited to this, and it may also be obtained by using the above-mentioned calculation formula after further correcting the arrival queue number and the signal battery swapping duration or introducing an error amount, or by further correcting or introducing the error amount based on the above-mentioned calculation result.

The above-mentioned steps fully consider a specific algorithm for determining the predicted queue duration in different scenes with the predicted queue number equal to 0 or being the arrival queue number, so the accuracy of estimation in the predicted queue duration is improved.

In an implementable manner, step 1206 may comprise the following steps:

when the predicted number of available batteries is less than or equal to 0 and the arrival queue number is less than or equal to 0, determining that the predicted queue number is equal to 0; and
when the predicted number of available batteries is less than or equal to 0 and the arrival queue number is greater than 0, taking the arrival queue number as the predicted queue number.

The above-mentioned steps fully consider a specific algorithm for determining the predicted queue number in different scenes with the predicted number of available batteries less than or equal to 0 and the arrival queue number less than or equal to 0 or greater than 0, so the accuracy of estimation in the predicted queue number is improved.

In an implementable manner, the estimated operation information may further comprise a predicted queue duration when the vehicle awaiting battery swapping arrives at the candidate battery swapping station; when the predicted queue number is equal to 0, the predicted queue duration is a residual charging duration of a battery which is not fully charged within the traveling duration and has the highest electric quantity; when the predicted queue number is the arrival queue number, the predicted queue duration is the smaller one of a first duration and a second duration, wherein the first duration is determined according to the arrival queue number, the single battery swapping duration and the number of battery swapping channels of the candidate battery swapping station, and the second duration is the $(k+1)^{th}$ residual charging duration of a battery which is currently not fully charged according to the residual charging duration in an ascending order, where k is the arrival queue number.

Where one possible calculation formula of the first duration is as follows: the first duration = the arrival queue number $\times$ the signal battery swapping duration/the number of battery swapping channels. The calculation formula of the first duration is not limited to this, and it may also be obtained by using the above-mentioned calculation formula after further correcting the arrival queue number and the signal battery swapping duration or introducing an error amount, or by further correcting or introducing the error amount based on the above-mentioned calculation result.

The above-mentioned steps fully consider a specific algorithm for determining the predicted queue duration in different scenes with the predicted queue number equal to 0 or being the arrival queue number, so the accuracy of estimation in the predicted queue duration is improved.

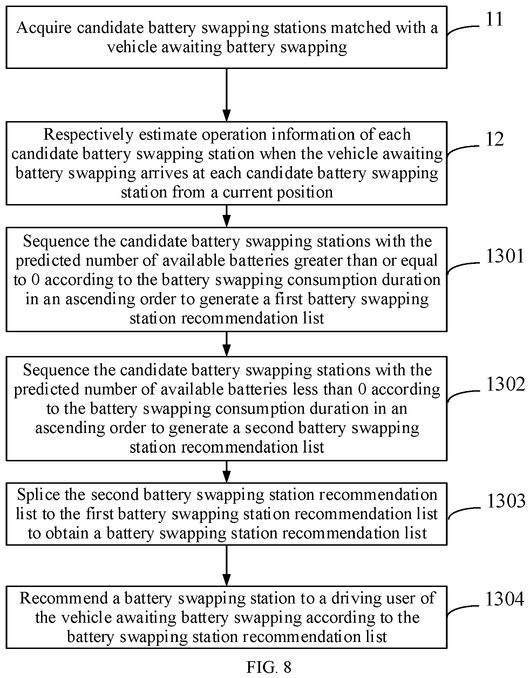

In an implementable manner, the estimated operation information comprises a predicted number of available batteries and a predicted battery swapping consumption duration when the vehicle awaiting battery swapping arrives at the candidate battery swapping station, the battery swapping consumption duration including a traveling duration and a predicted queue duration when the vehicle awaiting battery swapping arrives at the candidate battery swapping station; step 13 may specifically comprise the following steps, as shown in FIG. 8:

step 1301: sequencing the candidate battery swapping stations with the predicted number of available batteries greater than or equal to 0 according to the battery swapping consumption duration in an ascending order to generate a first battery swapping station recommendation list;
step 1302: sequencing the candidate battery swapping stations with the predicted number of available batteries less than 0 according to the battery swapping consumption duration in an ascending order to generate a second battery swapping station recommendation list;
step 1303: splicing the second battery swapping station recommendation list to the first battery swapping station recommendation list to obtain a battery swapping station recommendation list; and
step 1304: recommending a battery swapping station to a driving user of the vehicle awaiting battery swapping according to the battery swapping station recommendation list.

Through the above-mentioned steps, the method guides the user to preferentially select a candidate battery swapping station with the predicted number of available batteries greater than or equal to 0 and the shortest battery swapping consumption duration based on the battery swapping station recommendation list, and helps the user to complete battery swapping rapidly.

In an implementable manner, when a battery swapping station is recommended to a driving user of the vehicle awaiting battery swapping according to the estimated operation information, battery swapping station information of the recommended battery swapping station may be output. The battery swapping station information includes, but is not limited to, at least one of a predicted number of available batteries, a predicted queue number, and a predicted queue duration.

**Embodiment 4**

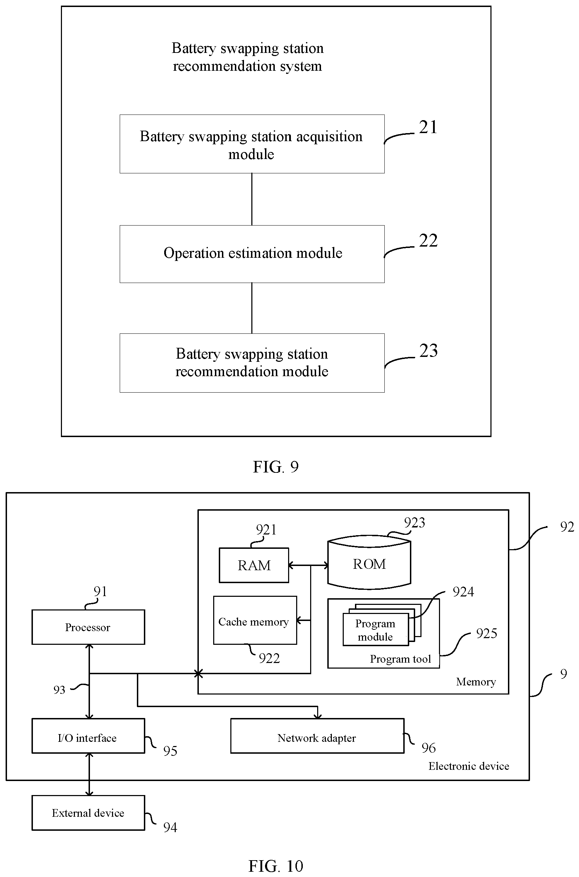

FIG. 9 shows a battery swapping station recommendation system according to this embodiment, which comprises: a battery swapping station acquisition module 21, an operation estimation module 22, and a battery swapping station recommendation module 23, wherein the battery swapping station acquisition module 21 is configured to acquire candidate battery swapping stations matched with a vehicle awaiting battery swapping; the operation estimation module 22 is configured to respectively estimate operation information of each candidate battery swapping station when the vehicle awaiting battery swapping arrives at each candidate battery swapping station from a current position; and the battery swapping station recommendation module 23 is configured to recommend a battery swapping station to a driving user of the vehicle awaiting battery swapping according to the estimated operation information.

Embodiment 5

The battery swapping station recommendation system in this embodiment is further improved based on Embodiment 4, wherein the battery swapping station acquisition module 21 is configured to:

acquire a real-time positioning position, a vehicle type and a real-time residual electric quantity of the vehicle awaiting battery swapping;
pick out battery swapping stations matched with the real-time positioning position and the vehicle type; and
pick out from the battery swapping stations, according to the real-time residual electric quantity, the candidate battery swapping stations located within an endurance mileage of the vehicle awaiting battery swapping.

In an implementable manner, picking out from the battery swapping stations, according to the real-time residual electric quantity, the candidate battery swapping stations located within the endurance mileage of the vehicle awaiting battery swapping comprises:

for each battery swapping station, performing the following functions:
determining a traveling route and a driving mileage of the vehicle awaiting battery swapping from a current position to the battery swapping station;
calculating, according to the traveling route and the driving mileage, a congestion coefficient of the vehicle awaiting battery swapping from the current position to the battery swapping station;
estimating, according to a rated electric quantity, a mileage per kilowatt-hour, the real-time residual electric quantity and the congestion coefficient of the vehicle awaiting battery swapping, an endurance mileage of the vehicle awaiting battery swapping traveling to the battery swapping station according to the traveling route; and
selecting, when the endurance mileage reaches the driving mileage, the battery swapping station as a candidate battery swapping station.

In an implementable manner, the calculation formula of the congestion coefficient is as follows:

$$ a = \frac{\sum_{i=1}^{n} T_i * S_i}{D} $$

In the formula, a represents the congestion coefficient, D represents the driving mileage, i represents the number of traffic congestion states corresponding to each road section in the traveling route, $T_i$ represents the congestion state coefficient, and $S_i$ represents the length of the road section corresponding to $T_i$.

In an implementable manner, the estimated operation information comprises a predicted number of available batteries when the vehicle awaiting battery swapping arrives at the candidate battery swapping station, and the operation estimation module 22 is configured to:

for each candidate battery swapping station, perform the following functions:
estimating a traveling duration of the vehicle awaiting battery swapping arriving at the candidate battery swapping station;
acquiring a current number of real-time available batteries of the candidate battery swapping station and a number of newly-added fully-charged batteries of the candidate battery swapping station within the traveling duration;
determining a total number of available batteries when the vehicle awaiting battery swapping arrives at the candidate battery swapping station according to the number of real-time available batteries and the number of newly-added fully-charged batteries;
acquiring an estimated battery swapping frequency of the candidate battery swapping station within the traveling duration; and
determining the predicted number of available batteries according to the total number of available batteries and the estimated battery swapping frequency.

In an implementable manner, estimating the traveling duration of the vehicle awaiting battery swapping arriving at the candidate battery swapping station comprises:

acquiring a traveling route of the vehicle awaiting battery swapping arriving at the candidate battery swapping station;
determining a total traveling distance of the traveling route, and a length of a road section with each congestion state on the traveling route and a congestion state coefficient; and
determining the traveling duration of the vehicle awaiting battery swapping arriving at the candidate battery swapping station according to the total traveling distance, the length of the road section with each congestion state on the traveling route and the congestion state coefficient.

In an implementable manner, acquiring the estimated battery swapping frequency of the candidate battery swapping station within the traveling duration comprises:

acquiring a current queue number of the candidate battery swapping station and a reference battery swapping frequency within a historical corresponding period from a current moment to the arrival of the vehicle awaiting battery swapping; and
selecting the larger one of the current queue number and the reference battery swapping frequency within a historical corresponding period as the estimated battery swapping frequency of the candidate battery swapping station within the traveling duration.

In an implementable manner, the battery swapping station recommendation module 23 is configured to: recommend a battery swapping station with the predicted number of available batteries greater than zero to the driving user of the vehicle awaiting battery swapping.

The system in this embodiment can estimate the operation information of the candidate battery swapping station when the vehicle arrives at the candidate battery swapping station, and provide a battery swapping station recommendation for a user based on the estimated operation information, without the need of the user prejudging by himself/herself the conditions of the candidate battery swapping station before the vehicle arrives at the candidate battery swapping station, thereby easily avoiding the occurrence of misjudgment, and improving the accuracy of the battery swapping station recommendation.

**Embodiment 6**

The battery swapping station recommendation system in this embodiment is further improved based on Embodiment 4, wherein the battery swapping station acquisition module 21 is configured to:

acquire alternative battery swapping stations matched with a vehicle type of the vehicle awaiting battery swapping within a target search range; and
pick out from the alternative battery swapping stations, according to the residual battery electric quantity of the vehicle awaiting battery swapping, the reference mileage per kilowatt-hour and a traveling path of the vehicle awaiting battery swapping away from each alternative battery swapping station, candidate battery swapping stations at which the vehicle awaiting battery swapping can arrive based on the residual battery electric quantity.

In an implementable manner, the estimated operation information comprises a predicted queue number when the vehicle awaiting battery swapping arrives at the candidate battery swapping station, and the operation estimation module 22 is configured to:

for each candidate battery swapping station, perform the following functions:
estimating a traveling duration of the vehicle awaiting battery swapping arriving at the candidate battery swapping station;
estimating a required battery swapping frequency of the candidate battery swapping station within the traveling duration;
estimating an actual battery swapping frequency of the candidate battery swapping station within the traveling duration;
estimating a predicted number of available batteries of the candidate battery swapping station when the vehicle awaiting battery swapping arrives at the candidate battery swapping station;
determining an arrival queue number when the vehicle awaiting battery swapping arrives at the candidate battery swapping station according to the required battery swapping frequency and the actual battery swapping frequency; and
determining a predicted queue number according to the arrival queue number and the predicted number of available batteries.

In an implementable manner, estimating the actual battery swapping frequency of the candidate battery swapping station within the traveling duration comprises:

estimating an ideal battery swapping frequency of the candidate battery swapping station within the traveling duration;
selecting, when the predicted number of available batteries is greater than or equal to 0, the smaller one of the ideal battery swapping frequency and the required battery swapping frequency as the actual battery swapping frequency; and
selecting, when the predicted number of available batteries is less than 0, the smaller one of the ideal battery swapping frequency and the total number of available batteries as the actual battery swapping frequency, wherein the total number of available batteries is relevant to the current number of real-time available batteries of the candidate battery swapping station and the number of newly-added fully-charged batteries of the candidate battery swapping station within the traveling duration.

In an implementable manner, estimating the ideal battery swapping frequency of the candidate battery swapping station within the traveling duration comprises:

acquiring a single battery swapping duration of the candidate battery swapping station and a number of battery swapping channels of the candidate battery swapping station; and
estimating the ideal battery swapping frequency of the candidate battery swapping station within the traveling duration according to the traveling duration, the single battery swapping duration and the number of battery swapping channels.

In an implementable manner, determining the predicted queue number according to the arrival queue number and the predicted number of available batteries comprises:

when the predicted number of available batteries is greater than 0 and the arrival queue number is less than or equal to 0, determining that the predicted queue number is equal to 0; and

when the predicted number of available batteries is greater than 0 and the arrival queue number is greater than 0, taking the arrival queue number as the predicted queue number.

In an implementable manner, the estimated operation information further comprises a predicted queue duration when the vehicle awaiting battery swapping arrives at the candidate battery swapping station; when the predicted queue number is equal to 0, the predicted queue duration is equal to 0; when the predicted queue number is the arrival queue number, the predicted queue duration is determined according to the arrival queue number, the single battery swapping duration and the number of battery swapping channels of the candidate battery swapping station.

In an implementable manner, determining the predicted queue number according to the arrival queue number and the predicted number of available batteries comprises:

when the predicted number of available batteries is less than or equal to 0 and the arrival queue number is less than or equal to 0, determining that the predicted queue number is equal to 0; and

when the predicted number of available batteries is less than or equal to 0 and the arrival queue number is greater than 0, taking the arrival queue number as the predicted queue number.

In an implementable manner, the estimated operation information further comprises a predicted queue duration when the vehicle awaiting battery swapping arrives at the candidate battery swapping station; when the predicted queue number is equal to 0, the predicted queue duration is a residual charging duration of a battery which is not fully charged within the traveling duration and has the highest electric quantity; when the predicted queue number is the arrival queue number, the predicted queue duration is the smaller one of a first duration and a second duration, wherein the first duration is determined according to the arrival queue number, the single battery swapping duration and the number of battery swapping channels of the candidate battery swapping station, and the second duration is the $(k+1)^{th}$ residual charging duration of a battery which is currently not fully charged according to the residual charging duration in an ascending order, where k is the arrival queue number.

In an implementable manner, the estimated operation information comprises a predicted number of available batteries and a predicted battery swapping consumption duration when the vehicle awaiting battery swapping arrives at the candidate battery swapping station, the battery swapping consumption duration including a traveling duration and a predicted queue duration when the vehicle awaiting battery swapping arrives at the candidate battery swapping station; the battery swapping station recommendation module is configured to:

sequence the candidate battery swapping stations with the predicted number of available batteries greater than or equal to 0 according to the battery swapping consumption duration in an ascending order to generate a first battery swapping station recommendation list;

sequence the candidate battery swapping stations with the predicted number of available batteries less than 0 according to the battery swapping consumption duration in an ascending order to generate a second battery swapping station recommendation list;

splice the second battery swapping station recommendation list to the first battery swapping station recommendation list to obtain a battery swapping station recommendation list; and

recommend a battery swapping station to a driving user of the vehicle awaiting battery swapping according to the battery swapping station recommendation list.

The system in this embodiment can estimate the operation information of the candidate battery swapping station when the vehicle arrives at the candidate battery swapping station, and provide a battery swapping station recommendation for a user based on the estimated operation information, without the need of the user prejudging by himself/herself the conditions of the candidate battery swapping station before the vehicle arrives at the candidate battery swapping station, thereby easily avoiding the occurrence of misjudgment, and improving the accuracy of the battery swapping station recommendation.

**Embodiment 7**

The embodiment of the present disclosure further provides an electronic device, which may be present in a form of a computing device (for example, may be a server device), and comprises a memory, a processor, and a computer program stored on the memory and executable on the processor, the processor, when executing the computer program, implementing the battery swapping station recommendation method according to any one of Embodiments 1-3 of the present disclosure.

FIG. 10 shows a schematic structural diagram of hardware in this embodiment. As shown in FIG. 10, the electronic device 9 specifically comprises:

at least one processor 91, at least one memory 92, and a bus 93 for connecting different system components (comprising the processor 91 and the memory 92), wherein,

the bus 93 includes a data bus, an address bus, and a control bus.

The memory 92 includes a volatile memory, such as a random access memory (RAM) 921 and/or a cache memory 922, and may further include a read-only memory (ROM) 923.

The memory 92 further includes a program/utility 925 having a set (at least one) of program modules 924, such program modules 924 including, but not limited to: an operation system, one or more application programs, other program modules and program data, each of which or some combinations thereof may include an implementation of a network environment.

The processor 91 executes various functional applications and performs data processing, such as the battery swapping station recommendation method according to any one of Embodiments 1-3 of the present disclosure, by executing the computer program stored in the memory 92.

The electronic device 9 may further communicate with one or more external devices 94 (such as a keyboard and a pointing device). Such communication may be implemented through an input/output (I/O) interface 95. In addition, the electronic device 9 may also communicate with one or more networks (such as a local area network (LAN), a wide area network (WAN), and/or a public network, such as the Internet) via a network adapter 96. The network adapter 96 communicates with other modules of the electronic device 9 via the bus 93. It should be understood that although not shown in the figures, other hardware and/or software modules may be used in conjunction with the electronic device 9, including, but not limited to: microcode, device drivers, redundant processors, external disk drive arrays, RAID (disk array) systems, tape drivers, data backup storage systems, and the like.

It should be noted that although several units/modules or sub-units/modules of the electronic device are mentioned in the above detailed description, such a division is merely exemplary but not mandatory. Indeed, the features and functions of two or more of the units/modules described above may be embodied in one unit/module according to embodiments of the present application. Conversely, the features and functions of one unit/module described above may be further divided to be embodied by a plurality of units/modules.

**Embodiment 8**

The embodiment of the present disclosure further provides a computer-readable storage medium having a computer program stored thereon, the program, when executed by a processor, implementing the steps of the battery swapping station recommendation method according to any one of Embodiments 1-3 of the present disclosure.

Where the readable storage medium may be employed more specifically and may include, but is not limited to: a portable disk, a hard disk, a random access memory, a read-only memory, an erasable programmable read-only memory, an optical storage device, a magnetic storage device, or any suitable combination of the foregoing.

In a possible implementation, the present disclosure may also be implemented in a form of a program product comprising program codes used for causing a terminal device to implement the steps of the battery swapping station recommendation method according to any one of Embodiments 1-3 of the present disclosure when the program product is executed on the terminal device.

Where the program codes used for implementing the present disclosure are written in any combination of one or more programming languages, and the program codes may be executed entirely on a user device, partly on the user device, as a stand-alone software package, partly on the user device and partly on a remote device, or entirely on the remote device.

Although specific embodiments of the present disclosure have been described above, it should be understood by those skilled in the art that these embodiments are merely illustrative and that the protection scope of the present disclosure is defined by the appended claims. Various changes or modifications may be made to these embodiments by those skilled in the art without departing from the principle and spirit of the present disclosure, and such changes and modifications shall fall within the protection scope of the present disclosure.

**Claims**

1. A battery swapping station recommendation method, comprising:

   acquiring candidate battery swapping stations matched with a vehicle awaiting battery swapping;
   respectively estimating operation information of each candidate battery swapping station when the vehicle awaiting battery swapping arrives at each candidate battery swapping station from a current position; and
   recommending a battery swapping station to a driving user of the vehicle awaiting battery swapping according to the estimated operation information.

2. The battery swapping station recommendation method according to claim 1, wherein acquiring the candidate battery swapping stations matched with the vehicle awaiting battery swapping comprises:

   acquiring a real-time positioning position, a vehicle type and a real-time residual electric quantity of the vehicle awaiting battery swapping;

picking out battery swapping stations matched with the real-time positioning position and the vehicle type; and

picking out from the battery swapping stations, according to the real-time residual electric quantity, the candidate battery swapping stations located within an endurance mileage of the vehicle awaiting battery swapping.

3. The battery swapping station recommendation method according to claim 2, wherein picking out from the battery swapping stations, according to the real-time residual electric quantity, the candidate battery swapping stations located within the endurance mileage of the vehicle awaiting battery swapping comprises:

performing the following steps for each battery swapping station:

determining a traveling route and a driving mileage of the vehicle awaiting battery swapping from a current position to the battery swapping station;

calculating, according to the traveling route and the driving mileage, a congestion coefficient of the vehicle awaiting battery swapping from the current position to the battery swapping station;

estimating, according to a rated electric quantity, a mileage per kilowatt-hour, the real-time residual electric quantity and the congestion coefficient of the vehicle awaiting battery swapping, an endurance mileage of the vehicle awaiting battery swapping traveling to the battery swapping station according to the traveling route; and

selecting, when the endurance mileage reaches the driving mileage, the battery swapping station as a candidate battery swapping station.

4. The battery swapping station recommendation method according to claim 3, wherein a calculation formula of the congestion coefficient is as follows:

$$a = \frac{\sum_{i=1}^{n} T_i * S_i}{D}$$

in the formula, a represents the congestion coefficient, $D$ represents the driving mileage, $i$ represents the number of traffic congestion states corresponding to each road section in the traveling route, $T_i$ represents a congestion state coefficient, and $S_i$ represents a length of a road section corresponding to $T_i$.

5. The battery swapping station recommendation method according to at least one of claims 1-4, wherein the estimated operation information comprises a predicted number of available batteries when the vehicle awaiting battery swapping arrives at the candidate battery swapping station; respectively estimating the operation information of each candidate battery swapping station when the vehicle awaiting battery swapping arrives at each candidate battery swapping station from the current position comprises:

performing the following steps for each candidate battery swapping station:

estimating a traveling duration of the vehicle awaiting battery swapping arriving at the candidate battery swapping station;

acquiring a current number of real-time available batteries of the candidate battery swapping station and a number of newly-added fully-charged batteries of the candidate battery swapping station within the traveling duration;

determining a total number of available batteries when the vehicle awaiting battery swapping arrives at the candidate battery swapping station according to the number of real-time available batteries and the number of newly-added fully-charged batteries;

acquiring an estimated battery swapping frequency of the candidate battery swapping station within the traveling duration; and

determining the predicted number of available batteries according to the total number of available batteries and the estimated battery swapping frequency.

6. The battery swapping station recommendation method according to claim 5, wherein estimating the traveling duration of the vehicle awaiting battery swapping arriving at the candidate battery swapping station comprises:

acquiring a traveling route of the vehicle awaiting battery swapping arriving at the candidate battery swapping station;

determining a total traveling distance of the traveling route, and a length of a road section with each congestion state on the traveling route and a congestion state coefficient; and

determining the traveling duration of the vehicle awaiting battery swapping arriving at the candidate battery swapping station according to the total traveling distance, the length of the road section with each congestion state on the traveling route and the congestion state coefficient.

7. The battery swapping station recommendation method according to at least one of claims 5-6, wherein acquiring the estimated battery swapping frequency of the candidate battery swapping station within the traveling duration comprises:

acquiring a current queue number of the candidate battery swapping station and a reference battery swapping frequency within a historical corresponding period from a current moment to the arrival of the vehicle awaiting battery swapping; and

selecting the larger one of the current queue number and the reference battery swapping frequency within a historical corresponding period as the estimated battery swapping frequency of the candidate battery swapping station within the traveling duration.

8. The battery swapping station recommendation method according to at least one of claims 5-7, wherein recommending the battery swapping station to the driving user of the vehicle awaiting battery swapping according to the estimated operation information comprises:

recommending a battery swapping station with the predicted number of available batteries greater than zero to the driving user of the vehicle awaiting battery swapping.

9. The battery swapping station recommendation method according to at least one of claims 1-8, wherein acquiring the candidate battery swapping stations matched with the vehicle awaiting battery swapping comprises:

acquiring alternative battery swapping stations matched with a vehicle type of the vehicle awaiting battery swapping within a target search range; and

picking out from the alternative battery swapping stations, according to the residual battery electric quantity of the vehicle awaiting battery swapping, the reference mileage per kilowatt-hour and a traveling path of the vehicle awaiting battery swapping away from each alternative battery swapping station, candidate battery swapping stations at which the vehicle awaiting battery swapping can arrive based on the residual battery electric quantity.

10. The battery swapping station recommendation method according to at least one of claims 1-9, wherein the estimated operation information comprises a predicted queue number when the vehicle awaiting battery swapping arrives at the candidate battery swapping station; respectively estimating the operation information of each candidate battery swapping station when the vehicle awaiting battery swapping arrives at each candidate battery swapping station from the current position comprises:

performing the following steps for each candidate battery swapping station:

estimating a traveling duration of the vehicle awaiting battery swapping arriving at the candidate battery swapping station;

estimating a required battery swapping frequency of the candidate battery swapping station within the traveling duration;

estimating an actual battery swapping frequency of the candidate battery swapping station within the traveling duration;

estimating a predicted number of available batteries of the candidate battery swapping station when the vehicle awaiting battery swapping arrives at the candidate battery swapping station;

determining an arrival queue number when the vehicle awaiting battery swapping arrives at the candidate battery swapping station according to the required battery swapping frequency and the actual battery swapping frequency; and

determining a predicted queue number according to the arrival queue number and the predicted number of available batteries.

11. The battery swapping station recommendation method according to claim 10, wherein estimating the actual battery swapping frequency of the candidate battery swapping station within the traveling duration comprises:

estimating an ideal battery swapping frequency of the candidate battery swapping station within the traveling duration;

selecting, when the predicted number of available batteries is greater than or equal to 0, the smaller one of the ideal battery swapping frequency and the required battery swapping frequency as the actual battery swapping frequency; and

selecting, when the predicted number of available batteries is less than 0, the smaller one of the ideal battery swapping frequency and the total number of available batteries as the actual battery swapping frequency, wherein the total number of available batteries is relevant to the current number of real-time available batteries of the candidate battery swapping station and the number of newly-added fully-charged batteries of the candidate battery swapping station within the traveling duration.

12. The battery swapping station recommendation method according to claim 11, wherein estimating the ideal battery swapping frequency of the candidate battery swapping station within the traveling duration comprises:

acquiring a single battery swapping duration of the candidate battery swapping station and a number of battery swapping channels of the candidate battery swapping station; and estimating the ideal battery swapping frequency of the candidate battery swapping station within the traveling duration according to the traveling duration, the single battery swapping duration and the number of battery swapping channels.

13. The battery swapping station recommendation method according to at least one of claims 11-12, wherein determining the predicted queue number according to the arrival queue number and the predicted number of available batteries comprises:

determining that the predicted queue number is equal to 0 when the predicted number of available batteries is greater than 0 and the arrival queue number is less than or equal to 0,; and taking the arrival queue number as the predicted queue number when the predicted number of available batteries is greater than 0 and the arrival queue number is greater than 0.

14. The battery swapping station recommendation method according to claim 13, wherein the estimated operation information further comprises a predicted queue duration when the vehicle awaiting battery swapping arrives at the candidate battery swapping station; when the predicted queue number is equal to 0, the predicted queue duration is equal to 0; when the predicted queue number is the arrival queue number, the predicted queue duration is determined according to the arrival queue number, the single battery swapping duration and the number of battery swapping channels of the candidate battery swapping station.

15. The battery swapping station recommendation method according to at least one of claims 12-14, wherein determining the predicted queue number according to the arrival queue number and the predicted number of available batteries comprises:

determining that the predicted queue number is equal to 0 when the predicted number of available batteries is less than or equal to 0 and the arrival queue number is less than or equal to 0; and taking the arrival queue number as the predicted queue number when the predicted number of available batteries is less than or equal to 0 and the arrival queue number is greater than 0.

16. The battery swapping station recommendation method according to claim 15, wherein the estimated operation information further comprises a predicted queue duration when the vehicle awaiting battery swapping arrives at the candidate battery swapping station; when the predicted queue number is equal to 0, the predicted queue duration is a residual charging duration of a battery which is not fully charged within the traveling duration and has the highest electric quantity; when the predicted queue number is the arrival queue number, the predicted queue duration is the smaller one of a first duration and a second duration, wherein the first duration is determined according to the arrival queue number, the single battery swapping duration and the number of battery swapping channels of the candidate battery swapping station, and the second duration is the $(k+1)^{th}$ residual charging duration of a battery which is currently not fully charged according to the residual charging duration in an ascending order, where k is the arrival queue number.

17. The battery swapping station recommendation method according to at least one of claims 1-16, wherein the estimated operation information comprises a predicted number of available batteries and a predicted battery swapping consumption duration when the vehicle awaiting battery swapping arrives at the candidate battery swapping station, the battery swapping consumption duration comprising a traveling duration and a predicted queue duration when the vehicle awaiting battery swapping arrives at the candidate battery swapping station; recommending the battery swapping station to the driving user of the vehicle awaiting battery swapping according to the estimated operation information comprises:

sequencing the candidate battery swapping stations with the predicted number of available batteries greater than or equal to 0 according to the battery swapping consumption duration in an ascending order to generate a first battery swapping station recommendation list; sequencing the candidate battery swapping stations with the predicted number of available batteries less than 0 according to the battery swapping consumption duration in an ascending order to generate a second battery swapping station recommendation list; splicing the second battery swapping station recommendation list to the first battery swapping station recommendation list to obtain a battery swapping station recommendation list; and recommending a battery swapping station to a driving user of the vehicle awaiting battery swapping according to the battery swapping station recommendation list.

18. A battery swapping station recommendation system, comprising:

a battery swapping station acquisition module, configured to acquire candidate battery swapping stations matched with a vehicle awaiting battery swapping;

an operation estimation module, configured to respectively estimate operation information of each candidate battery swapping station when the vehicle awaiting battery swapping arrives at each candidate battery swapping station from a current position; and

a battery swapping station recommendation module, configured to recommend a battery swapping station to a driving user of the vehicle awaiting battery swapping according to the estimated operation information.

19. An electronic device, comprising a memory, a processor and a computer program stored on the memory and executable on the processor, wherein the processor, when executing the computer program, implements the battery swapping station recommendation method according to at least one of claims 1-17.

20. A computer-readable storage medium having a computer program stored thereon, wherein the computer program, when executed by a processor, implements the battery swapping station recommendation method according to at least one of claims 1-17.

Acquire candidate battery swapping stations
matched with a vehicle awaiting battery swapping — 11

Respectively estimate operation information of
each candidate battery swapping station when the
vehicle awaiting battery swapping arrives at each
candidate battery swapping station from a current
position — 12

Recommend a battery swapping station to a driving
user of the vehicle awaiting battery swapping
according to the estimated operation information — 13

FIG. 1

Acquire a real-time positioning position, a vehicle
type and a real-time residual electric quantity of
the vehicle awaiting battery swapping — 111

Pick out battery swapping stations matched with
the real-time positioning position and the vehicle
type — 112

Pick out from the battery swapping stations,
according to the real-time residual electric
quantity, the candidate battery swapping stations
located within an endurance mileage of the
vehicle awaiting battery swapping — 113

FIG. 2

Estimate a traveling duration of the vehicle awaiting battery swapping arriving at the candidate battery swapping station — 121

Acquire a current number of real-time available batteries of the candidate battery swapping station and a number of newly-added fully-charged batteries of the candidate battery swapping station within the traveling duration — 122

Determine a total number of available batteries when the vehicle awaiting battery swapping arrives at the candidate battery swapping station according to the number of real-time available batteries and the number of newly-added fully-charged batteries — 123

Acquire an estimated battery swapping frequency of the candidate battery swapping station within the traveling duration — 124

Determine the predicted number of available batteries according to the total number of available batteries and the estimated battery swapping frequency — 125

FIG. 3

Acquire alternative battery swapping stations matched with a vehicle type of the vehicle awaiting battery swapping within a target search range — 1101

Pick out from the alternative battery swapping stations, according to the residual battery electric quantity of the vehicle awaiting battery swapping, the reference mileage per kilowatt-hour and a traveling path of the vehicle awaiting battery swapping away from each alternative battery swapping station, candidate battery swapping stations at which the vehicle awaiting battery swapping can arrive based on its residual battery electric quantity — 1102

Respectively estimate operation information of each candidate battery swapping station when the vehicle awaiting battery swapping arrives at each candidate battery swapping station from a current position — 12

Recommend a battery swapping station to a driving user of the vehicle awaiting battery swapping according to the estimated operation information — 13

FIG. 4

Estimate a traveling duration of the vehicle awaiting battery swapping arriving at the candidate battery swapping station and a predicted number of available batteries — 1201

Estimate a required battery swapping frequency of the candidate battery swapping station within the traveling duration — 1202

Estimate an actual battery swapping frequency of the candidate battery swapping station within the traveling duration — 1203

Estimate a predicted number of available batteries of the candidate battery swapping station when the vehicle awaiting battery swapping arrives at the candidate battery swapping station — 1204

Determine an arrival queue number when the vehicle awaiting battery swapping arrives at the candidate battery swapping station according to the required battery swapping frequency and the actual battery swapping frequency — 1205

Determine a predicted queue number according to the arrival queue number and the predicted number of available batteries — 1206

FIG. 5

```
┌─────────────────────────────────────┐
│   Estimate an ideal battery swapping frequency   │
│     of the candidate battery swapping station    │
│          within the traveling duration           │
└─────────────────────────────────────┘
                    │
                    ▼
              ╱ Predicted ╲
         ╱ number of available batteries ╲ ──No──▶
              ╲    > 0?    ╱
                  Yes
```

Predicted number of available batteries > 0?

— No — Ideal battery swapping frequency > total number of available batteries?

— No — Actual battery swapping frequency = total number of available batteries

Yes (second diamond) → Actual battery swapping frequency = ideal battery swapping frequency

Yes (first diamond) → Ideal battery swapping frequency > required battery swapping frequency?

— No — Actual battery swapping frequency = ideal battery swapping frequency

Yes → Actual battery swapping frequency = required battery swapping frequency

FIG. 6

FIG. 7

Acquire candidate battery swapping stations matched with a vehicle awaiting battery swapping — 11

Respectively estimate operation information of each candidate battery swapping station when the vehicle awaiting battery swapping arrives at each candidate battery swapping station from a current position — 12

Sequence the candidate battery swapping stations with the predicted number of available batteries greater than or equal to 0 according to the battery swapping consumption duration in an ascending order to generate a first battery swapping station recommendation list — 1301

Sequence the candidate battery swapping stations with the predicted number of available batteries less than 0 according to the battery swapping consumption duration in an ascending order to generate a second battery swapping station recommendation list — 1302

Splice the second battery swapping station recommendation list to the first battery swapping station recommendation list to obtain a battery swapping station recommendation list — 1303

Recommend a battery swapping station to a driving user of the vehicle awaiting battery swapping according to the battery swapping station recommendation list — 1304

FIG. 8

Battery swapping station
recommendation system

Battery swapping station acquisition
module — 21

Operation estimation module — 22

Battery swapping station
recommendation module — 23

FIG. 9

921 923 92

RAM ROM

91 924

Cache memory Program module

Processor 925

922 Program tool

93 Memory 9

I/O interface Network adapter

95 96

Electronic device

External device

94

FIG. 10

## INTERNATIONAL SEARCH REPORT

| International application No. |
|---|
| **PCT/CN2021/142992** |

**A. CLASSIFICATION OF SUBJECT MATTER**

G06Q 10/04(2012.01)i；G06Q 10/06(2012.01)i

According to International Patent Classification (IPC) or to both national classification and IPC

**B. FIELDS SEARCHED**

Minimum documentation searched (classification system followed by classification symbols)

G06Q10/-

Documentation searched other than minimum documentation to the extent that such documents are included in the fields searched

Electronic data base consulted during the international search (name of data base and, where practicable, search terms used)

CNABS, CNTXT, CNKI: 电池数, 电池库存, 换电站, 车, 预测, 预估, 位置, 定位, 到达, 排队, 拥堵, 剩余电量; VEN, USTXT, IEEE: battery, number, inventory, replac+, vehicle, predict+, forecast+, position, location, arriv+, queu+, congestion, remain+ power

**C. DOCUMENTS CONSIDERED TO BE RELEVANT**

| Category* | Citation of document, with indication, where appropriate, of the relevant passages | Relevant to claim No. |
|---|---|---|
| X | CN 109040265 A (SHENZHEN XUFA INTELLIGENT TECH CO., LTD.) 18 December 2018 (2018-12-18) claims 1 and 5-7 | 1-5, 7-9, 18-20 |
| Y | CN 109040265 A (SHENZHEN XUFA INTELLIGENT TECH CO., LTD.) 18 December 2018 (2018-12-18) claims 1 and 5-7 | 6, 17 |
| Y | CN 106548246 A (SHENZHEN INSTITUTE OF BEIDOU APPLIED TECHNOLOGY) 29 March 2017 (2017-03-29) description, paragraphs [0061]-[0066] | 6, 17 |
| A | CN 106926716 A (NEXTEV LIMITED) 07 July 2017 (2017-07-07) entire document | 1-20 |
| A | JP 2020004417 A (RESC LTD.) 09 January 2020 (2020-01-09) entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 February 2022** | **29 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/142992**

| Patent document cited in search report | | | Publication date (day/month/year) | Patent family member(s) | | | Publication date (day/month/year) |
|---|---|---|---|---|---|---|---|
| CN | 109040265 | A | 18 December 2018 | None | | | |
| CN | 106548246 | A | 29 March 2017 | CN | 106548246 | B | 26 May 2020 |
| CN | 106926716 | A | 07 July 2017 | None | | | |
| JP | 2020004417 | A | 09 January 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020116236429
- CN 2020116236096